# EUROPÄISCHE PATENTSCHRIFT

(11) **EP 1 206 870 B1**
(45) Veröffentlichungstag und Bekanntmachung des Hinweises auf die Patenterteilung: **16.06.2004**
(21) Anmeldenummer: 00934896.2
(22) Anmeldetag: 12.04.2000
(51) Int. Cl.: H04M 1/02, H04M 1/23

(54) **TRAGBARES TELEFON**
PORTABLE TELEPHONE
TELEPHONE PORTABLE

(30) Priorität: 27.08.1999 DE 19940826
(43) Veröffentlichungstag der Anmeldung: 22.05.2002
(73) Patentinhaber: SIEMENS AKTIENGESELLSCHAFT, 80333 München (DE)
(72) Erfinder: HÖCKENREINER, Hans, Peter, D-82110 Germering (DE); TOPEL, Mario, D-85551 Kirchheim (DE); KREMMER, Ingrid, D-82166 Gräfelfing (DE); GOEBEL, Klaus, D-81927 München (DE)
(86) Internationale Anmeldenummer: PCT/DE2000/001125
(87) Internationale Veröffentlichungsnummer: WO 2001/017204

(56) Entgegenhaltungen:
- EP-A- 0 740 446
- EP-A- 0 776 140
- US-A- 5 646 649

## Beschreibung

Die Erfindung betrifft ein tragbares Telefon nach dem Oberbegriff des Anspruchs 1.

Ein Telefon weist zur Eingabe der Rufnummern und zur Steuerung bestimmter Zusatzfunktionen üblicherweise eine Zifferntastatur mit einer geringen Anzahl von Zusatztasten auf. Komfortable Festnetztelefone sind vielfach auch mit einer größeren Anzahl von Zusatztasten zur Steuerung von Komfortfunktionen ausgerüstet. Bei tragbaren Telefonen verbietet sich das Vorsehen einer großen Anzahl von Eingabetasten schon wegen der angestrebten Minimierung des Volumens, so dass hier bekanntlich durch Mehrfachbelegung der Zi-fferntasten und eine über wenige Zusatztasten gesteuerte Menüführung sowohl eine alphanumerische Eingabe als auch die Realisierung vielfältiger Funktionen ermöglicht wird.

Seit längerem sind auch berührungsempfindliche Anzeigen, sog. Touch-Screens, in Gebrauch, bei denen der Benutzer eine Eingabe durch punktuellen Druck auf die gleichzeitig als Anzeige- und Eingabefeld dienende Oberfläche vornimmt. In hochwertigeren Ausführungen ermöglichen solche Touch-Screens eine Handschrift-Eingabe. Sie stellen mittlerweile eine verbreitete Anzeige- und Eingabeeinrichtung für komplexere handgehaltene elektronische Geräte dar, etwa für Organizer, PDAs oder Handheld-PCs.

Touch-Screens sind kostenaufwendige und mechanisch empfindliche Bauteile, die - insbesondere im Hinblick auf ihre hohen Kosten, die einen erheblichen Anteil des Gerätepreises von Organizern oder PDAs etc. ausmachen - einen mechanischen Schutz im unbenutzten Zustand erfordern. Diese Funktion übernehmen üblicherweise Abdeckungen, die über den Touch-Screen geschoben oder geklappt werden. Diese Abdeckungen schließen in der Regel eine Benutzung des Touch-Screen und damit des Gerätes im geschützten Zustand aus. In einer anderen verbreiteten Ausführung umfassen Organizer oder Handheld-PCs zwei Teilgehäuse, von denen das eine an seiner Oberfläche eine Eingabetastatur und das andere ein Display trägt, wobei im geschlossenen Zustand Display und Eingabetastatur übereinander und geschützt im Inneren des geschlossenen Gehäuses liegen.

Mit der Entwicklung der mobilen Telefonie zu einem Massenmarkt hat auch die Entwicklung von Kombinationsgeräten eingesetzt, die die Funktionen eines Mobiltelefons und eines Organizers oder PDA in vorteilhafter Weise in sich vereinigen. Derartige Kombinationsgeräte bestehen üblicherweise aus zwei Teilgehäusen, die über ein Scharnier klappbar miteinander verbunden sind. Solche Geräte, die man als Mehrfunktions-Mobiltelefon bezeichnen kann, sind in einer Ausführungsform als Klappgehäuse in Art der oben erwähnten Organizer oder PDA mit herkömmlicher Eingabetastatur und herkömmlicher LCD-Anzeige gestaltet. In einer weiteren bekannten Ausführungsform weisen solche Mobiltelefone einen Touch-Screen auf, auf den in der Funktion als Mobiltelefon eine Telefontastatur geklappt wird, während diese Tastatur in der Organizer-Funktion weggeklappt ist und den gesamten Touch-Screen freigibt. Hierdurch wird die Nutzung der vollständigen Organizer- bzw. PDA-Funktionalität erreicht. Im Telefonbetrieb lässt die Abdekkung immerhin einen Teil des Touch-Screen frei, wodurch ein reduziertes Display für die Telefonbedienung bereitgestellt wird. Hierbei wird natürlich auch ein anderer Anzeigemodus als in der Organizer-Funktion ("Portrait"-Darstellung anstelle "Landscape"-Darstellung") geschaltet.

Die bekannten tragbaren Telefone dieser Art sind noch recht voluminös, was unter anderem damit zusammenhängt, dass eine sinnvolle und komfortable Organizer-Funktion eine gewisse Größe des Touch-Screen erfordert und zudem auf der Geräteoberfläche noch weitere, zum Teil relativ platzaufwendige Ein- bzw. Ausgabeelemente untergebracht werden müssen.

Aus der EP 0 740 446 A2 ist ein tragbares Telefon mit zwei Teilgehäusen bekannt. Die beiden Teilgehäuse sind über ein Klappscharnier miteinander verbunden, so daß diese in eine kompakte Stellung und eine Aufklappstellung bringbar sind. In der Aufklappstellung ist eine Aktivfläche freigegeben. Das aus der EP 0 740 446 A2 bekannte tragbare Telefon hat jedoch den Nachteil, dass die Anordnung der Hörkapsel außerhalb der Aktivfläche zu einer deutlich erhöhten Dimensionierung des tragbaren Telefons führt, welche deutlich größer ist als die zur Unterbringung der Aktivfläche erforderliche Dimensionierung.

Der Erfindung liegt daher die Aufgabe zugrunde, ein verbessertes tragbares Telefon anzugeben, das die Realisierung eines relativ großen Touch-Screen bei minimalen Gehäuseabmessungen darstellt.

Die Aufgabe wird durch ein tragbares Telefon mit den Merkmalen des Anspruchs 1 gelöst.

Die Erfindung schließt den wesentlichen Gedanken ein, diejenige Geräteoberfläche, die den Touch-Screen aufnimmt, möglichst weitgehend allein für den Touch-Screen zu reservieren und keine weiteren Funktionskomponenten dort unterzubringen. Das ermöglicht eine Verkürzung des Gehäuses.

In einer bevorzugten Ausführungsform wird das tradierte Benutzerverhalten dadurch besonders angesprochen, dass die Eingabemittel für den Telefonbetrieb als herkömmliche Handytastatur ausgebildet sind. In einer ersten Realisierungsform einer solchen Tastatur weisen die Tasten auf der dem Touch-Screen zugewandten Rückseite des die Tastatur tragenden zweiten Teilgehäuses jeweils einen Druckstift auf. Durch geeignete, an sich bekannte Ausführung der Tasten mit sog. "Knackfröschen" oder ähnlichen Mitteln lässt sich neben dem vertrauten äußeren Erscheinungsbild einer Handy-Tastatur auch ein vergleichbares Betätigungs-Feedback erzeugen. In einer anderen Realisierungsform ist die Eingabetastatur eine völlig vom Touch-Screen getrennte, eigenständige Handy-Tastatur. Diese kann vollkommen in der bei Mobiltelefonen üblichen Art aufgebaut sein, oder es kann im Interesse einer möglichst geringen Bauhöhe eine Folientastatur oder ähnlich flache Tastatur vorgesehen sein.

In einer alternativen Ausführungsform, die noch einfacher und kostengünstiger realisierbar ist, sind die Eingabemittel durch Ausnehmungen im zweiten Teilgehäuse (das hier im wesentlichen nur die Funktion einer Abdeckung hat) in Verbindung mit auf dem Touch-Screen dargestellten Eingabefeldern gebildet. Durch das Zusammenwirken von Ausnehmungen und Touch-Screen-Eingabefeldern wird ein Tastenfeld gewissermaßen "simuliert". Der Vorteil der großen Einfachheit wird bei dieser Ausführungsform allerdings mit gewissen ergonomischen Nachteilen erkauft.

Die beiden Teilgehäuse sind in einer bevorzugten - und an sich bekannten - mechanischen Ausführung durch ein Scharnier miteinander verbunden und zueinander schwenkbar. In einer ersten Schwenkstellung gibt das zweite Teilgehäuse den Touch-Screen im wesentlichen ganz frei, und in einer zweiten Schwenkstellung (in der der Telefonbetrieb realisiert wird) bedeckt sie ihn im wesentlichen völlig.

In einer hierzu alternativen Ausführung sind die beiden Teilgehäuse über entsprechende Führungen miteinander verschieblich verbunden, wobei auch hier in einer ersten Stellung - der Organizer-/PDA-Betriebsstellung - der Touch-Screen gänzlich freigegeben und in einer zweiten Stellung - der Telefon-Betriebsstellung - abgedeckt ist.

In beiden Ausführungen weist das zweite Teilgehäuse ein Fenster auf, durch das der für den Telefonbetrieb wesentliche Teil des Touch-Screen wahrgenommen werden kann, das aber zusammen mit den übrigen Bereichen des zweiten Teilgehäuses den empfindlichen Touch-Screen auf seiner gesamten Fläche abdeckt und vor Beschädigungen schützt. In einer besonders einfachen Ausführung kann dieses Fenster allerdings auch fortgelassen und an seiner Stelle ein einfacher Gehäuseausschnitt vorgesehen sein.

Das vorgeschlagene Gerät weist vorteilhafterweise einen Eingabe-Funktionsumschalter auf, der bei der Bewegung der beiden Teilgehäuse relativ zueinander betätigt wird und eine Umschaltung zwischen einem Touch-Screen-Eingabemodus (Organizer-/PDA-Betrieb) und einem Tastatur-Eingabemodus (Telefonbetrieb) bewirkt, wobei im letzteren Modus ein Teilbereich des Touch-Screen in spezieller Weise als Telefon-Display geschaltet wird.

In einer sinnreichen Ausführung der Gehäuseschalen ist dort seitlich eine Ausnehmung zur Aufnahme eines Eingabestiftes zur Betätigung des Touch-Screen vorgesehen, wo dieser - bevorzugt unverlierbar befestigt - stets zur Hand ist.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:

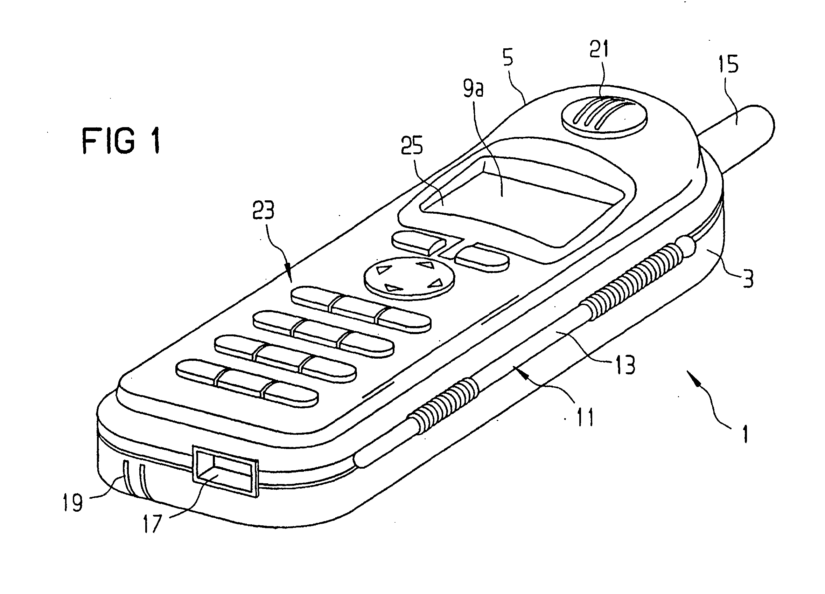

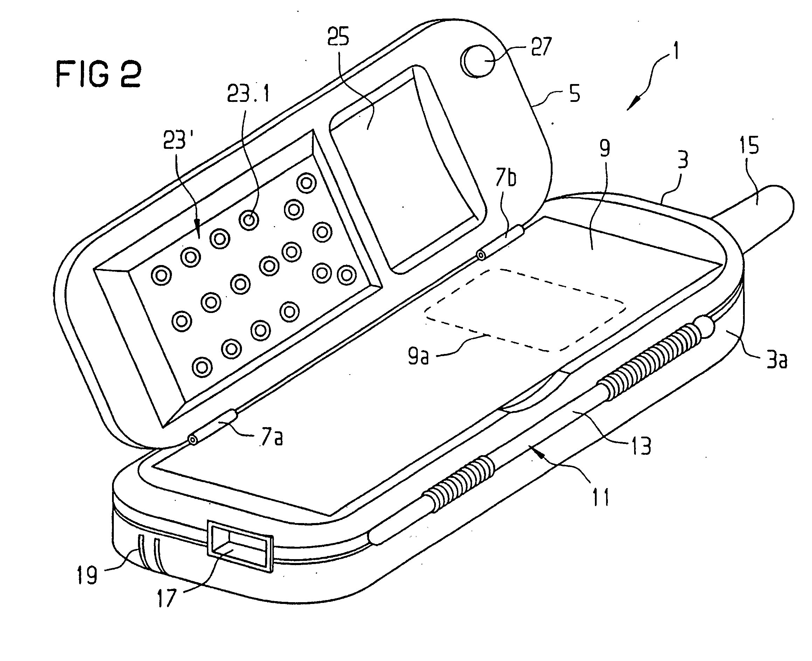

Fig. 1 eine Schrägansicht eines Mobiltelefons gemäß einer Ausführungsform der Erfindung mit geschlossenem Gehäuse und Fig. 2 eine Schrägansicht des in Fig. 1 gezeigten Mobiltelefons mit geöffneten Gehäuse und freilegendem Touch-Screen.

Die Figuren 1 und 2 zeigen in perspektivischer Ansicht ein Mobiltelefon 1 mit der Zusatzfunktionalität eines Palmtop. Das Mobiltelefon 1 umfasst ein erstes Gehäuseteil 3 und ein zweites Gehäuseteil 5, die über ein zweiteiliges Klappscharnier 7a, 7b an einer Längsseite schwenkbar miteinander verbunden sind.

Auf der Oberseite des ersten Gehäuseteils 3 ist ein praktisch die gesamte Oberfläche einnehmender Touch-Screen 9 als Eingabe- und Anzeigeeinrichtung des Mobiltelefons im Palmtop-Betriebsmodus vorgesehen. In einer Seitenfläche 3a des ersten Gehäuseteils 3 ist eine Ausnehmung 11 für einen Kugelschreiber 13 vorgesehen, der als Eingabestift für den Touch-Screen 9 dient. Des weiteren trägt das erste Gehäuseteil eine Antenne 15 und weist eine Anschlussbuchse 17 für eine Datenleitung auf. An der unteren Stirnfläche 3b des ersten Gehäuseteils 3 ist ein Mikrofon (eine Sprechkapsel) 19 plaziert.

Das zweite Gehäuseteil ist in Fig. 1 von der Oberseite und in Fig. 2 - im aufgeklapptem Zustand des Mobiltelefons 1 - von der Unterseite her zu sehen. In Fig. 1 ist zu erkennen, dass im zweiten Gehäuseteil 5 eine Hörkapsel 21 und eine Eingabetastatur 23 zur Realisierung der Telefon-Funktionen untergebracht ist. Zwischen der Kapsel 21 und der Eingabetastatur 23 ist - in der bei Mobiltelefonen an sich üblichen Anordnung - ein Anzeigefenster 25 vorgesehen, das dem Benutzer den Blick auf einen Abschnitt 9a des Touch-Screen 9 auch bei geschlossenem Gehäuse des Mobiltelefons 1 freigibt. Die Eingabetastatur 23 ist - wie in Fig. 2 zu erkennen ist - auf ihrer der Oberfläche des Touch-Screen 9 zugewandten Unterseite als mechanische Tastenanordnung 23' ausgebildet, über die bei einer Tastenbetätigung Druck auf einen bestimmten Bereich des Touch-Screen 9 ausgeübt und damit eine Zifferneingabe oder eine Funktion im Telefonbetrieb ausgelöst wird. Mit jeder Taste kann zu diesem Zweck beispielsweise ein stumpfer Kunststoff- oder Hartgummi-Druckstift 23.1 verbunden sein und die Taste kann druch ein Federelement nach oben hin vorgespannt sein.

Im geschlossenen Zustand des Mobiltelefons 1 ist der Touch-Screen 9 im Telefon-Modus derart aktiviert, dass der Konfiguration der Druckstiftanordnung 23' der Eingabetastatur 23 eine Eingabemaske unter Einsatz des Mobiltelefon-MMI (Man-Machine-Interface) eines herkömmlichen Mobiltelefons zugeordnet ist.

In dem in Fig. 2 gezeigten geöffneten Zustand ist eine PC-Benutzeroberfläche aktiviert, wobei beim Öffnen der Abdekkung zunächst ein entsprechendes Startmenü aufgerufen wird. Zur Umschaltung zwischen den Betriebsmodi ist auf der Unterseite des zweiten Gehäuseteils 5 ein als Taster ausgebildeter Umschalter 27 vorgesehen, über den natürlich zugleich mit der Betriebsart-Umschaltung die Umschaltung des Anzeige- sowie auch des Eingabemodus des Touch-Screen ausgeführt wird. Zum Anschluss der Kapsel 21 und des Umschalters 27 an die Leiterplatte des Mobiltelefons ist eine innerhalb des Klappscharniers 7b verlaufende Leitung vorgesehen, die aus dem zweiten Teilgehäuse 5 in das erste Teilgehäuse 3 führt.

Die Ausführung der Erfindung ist nicht auf das beschriebene Ausführungsbeispiel beschränkt, sondern auch in einer Vielzahl von Abwandlungen im Rahmen fachgemäßen Handelns möglich. Insbesondere sind Abwandlungen hinsichtlich der konkreten Anordnung der Sprech- und Hörkapsel möglich, wobei die Anordnung der relativ voluminösen Hörkapsel im zweiten Gehäuseteil in Überdeckung eines Abschnitts des Touch-Screen ein wesentliches Merkmal der Erfindung darstellt. Sie ermöglicht insbesondere eine Verkürzung des Telefongehäuses, entsprechend einem wichtigen Käuferwunsch.

Eine Ausnehmung für einen Eingabestift kann auch an anderer Stelle vorgesehen sein, beispielsweise im Bodenbereich des ersten Gehäuseteils oder auch am zweiten Gehäuseteils; sie kann aber auch entfallen.

Anstelle des oben beschriebenen Mobiltelefons kann auch ein Schnurlostelefon mit erweiterter Funktionalität auf die erläuterte Weise aufgebaut sein, um bei minimalen Gehäuseabmessungen einen möglichst großflächigen Anzeige- und Eingabeschirm für die Zusatzfunktion (Datenbasis, Taschenübersetzer, Organizer o. ä.) bereitzustellen.

## Patentansprüche

1. Tragbares Telefon, insbesondere Mobiltelefon (1) oder Schnurlostelefon, mit einer auf einer Oberfläche eines ersten Teilgehäuses (3) angeordneten, als Touch-Screen (9) ausgebildeten Anzeige- und Eingabeeinrichtung und einem den Touch-Screen in einer ersten Betriebsstellung des tragbaren Telefons im wesentlichen überdeckenden und ihn in einer zweiten Betriebsstellung im wesentlichen freigebenden zweiten Teilgehäuse (5), welches zusätzliche Eingabemittel (23) aufweist,
**dadurch gekennzeichnet,**
**dass** das zweite Teilgehäuse eine Hörkapsel (21) aufnimmt, derart, dass diese in der ersten Betriebsstellung über dem Touch-Screen (9) liegt.

2. Tragbares Telefon nach Anspruch 1,
**dadurch gekennzeichnet,**
**dass** der Touch-Screen (9) im wesentlichen eine gesamte Oberfläche des ersten Teilgehäuses (3) einnimmt.

3. Tragbares Telefon nach Anspruch 1 oder 2,
**dadurch gekennzeichnet,**
**dass** die zusätzlichen Eingabemittel (23) als mechanische Tastatur ausgebildet sind, wobei den Tasten auf der dem Touch-Screen (9) zugewandten Rückseite jeweils ein Druckstift (23.1) zugeordnet ist, über den punktueller Druck auf einen vorbestimmten Bereich des Touch-Screen ausgeübt wird.

4. Tragbares Telefon nach Anspruch 1 oder 2,
**dadurch gekennzeichnet,**
**dass** die Eingabemittel durch Ausnehmungen im zweiten Teilgehäuse (5) in Verbindung mit auf dem Touch-Screen (9) dargestellten Eingabefeldern gebildet sind, die zusammen eine Eingabemaske für den Touch-Screen in einem vorbestimmten Telefon-Eingabemodus bilden.

5. Tragbares Telefon nach Anspruch 1 oder 2,
**dadurch gekennzeichnet,**
**dass** die zusätzlichen Eingabemittel als vom Touch-Screen (9) unabhängige Eingabetastatur ausgebildet sind.

6. Tragbares Telefon nach einem der vorangehenden Ansprüche,
**dadurch gekennzeichnet,**
**dass** das zweite Teilgehäuse mit den zusätzlichen Eingabemitteln gegenüber dem ersten Teilgehäuse mit dem Touch-Screen verschieblich ausgeführt ist derart, dass es in einer ersten Schiebestellung den Touch-Screen im wesentlichen ganz frei gibt und ihn in einer zweiten Schiebestellung im wesentlichen ganz bedeckt.

7. Tragbares Telefon nach einem der Ansprüche 1 bis 5,
**dadurch gekennzeichnet,**
**dass** das zweite Teilgehäuse (5) mit den zusätzlichen Eingabemitteln (23) gegenüber dem ersten Teilgehäuse (3) schwenkbar ausgeführt ist derart, dass es in einer ersten Schwenkstellung (Fig.2) den Touch-Screen (9) im wesentlichen ganz frei gibt und ihn in einer zweiten Schwenkstellung (Fig. 1) im wesentlichen ganz bedeckt.

8. Tragbares Telefon nach einem der vorangehenden Ansprüche,
**dadurch gekennzeichnet,**
**dass** das zweite Teilgehäuse (5) einen Fensterbereich (25) aufweist, der in der ersten Betriebsstellung einen Abschnitt (9a) des Touch-Screen (9) transparent bedeckt.

9. Tragbares Telefon nach einem der vorangehenden Ansprüche,
**gekennzeichnet durch**
einen Umschalter (27) der insbesondere bei einem Verschieben oder Klappen des zweiten Teilgehäuses (5) gegenüber dem ersten Teilgehäuse (3) betätigt wird und eine Umschaltung zwischen einem Touch-Screen-Eingabemodus und einem Eingabemittel-Eingabemodus sowie eine Umschaltung von Anzeigefunktionen bewirkt.

10. Tragbares Telefon nach einem der vorangehenden Ansprüche
**gekennzeichnet durch**
eine Ausnehmung (11) zur Aufnahme eines Eingabestiftes (13), insbesondere in einer Seitenfläche, des ersten oder zweiten Teilgehäuses (3, 5).

## Claims

1. Portable telephone, in particular mobile telephone (1) or cordless telephone, having a display and input device which is arranged on a surface of a first part (3) of the housing and is embodied as a touch screen (9), and a second part (5) of the housing which essentially covers the touch screen in a first operating position of the portable telephone and essentially exposes it in a second operating position, and which has additional input means (23), **characterized in that** the second part of the housing accommodates a telephone receiver (21) in such a way that said receiver is situated over the touch screen (9) in the first operating position.

2. Portable telephone according to Claim 1, **characterized in that** the touch screen (9) essentially occupies an entire surface of the first part (3) of the housing.

3. Portable telephone according to Claim 1 or 2, **characterized in that** the additional input means (23) are embodied as a mechanical keypad, in each case a pressure pin (23.1) via which point pressure is exerted on a predetermined region of the touch screen being assigned to the keys on the reverse side facing the touch screen (9).

4. Portable telephone according to Claim 1 or 2, **characterized in that** the input means are formed by recesses in the second part (5) of the housing in conjunction with input fields which are represented on the touch screen (9) and which together form an input mask for the touch screen in a predetermined telephone input mode.

5. Portable telephone according to Claim 1 or 2, **characterized in that** the additional input means are embodied as an input keypad which is independent of the touch screen (9).

6. Portable telephone according to one of the preceding claims, **characterized in that** the second part of the housing with the additional input means is designed to be displaceable with respect to the first part of the housing with the touch screen, in such a way that it essentially entirely exposes the touch screen in a first displaced position and essentially entirely covers it in a second displaced position.

7. Portable telephone according to one of Claims 1 to 5, **characterized in that** the second part (5) of the housing with the additional input means (23) is designed to be pivotable with respect to the first part (3) of the housing, in such a way that it essentially entirely exposes the touch screen (9) in a first pivoted position (Fig. 2) and essentially entirely covers it in a second pivoted position (Fig. 1).

8. Portable telephone according to one of the preceding claims, **characterized in that** the second part (5) of the housing has a window region (25) which covers in a transparent fashion a section (9a) of the touch screen (9) in the first operating position.

9. Portable telephone according to one of the preceding claims, **characterized by** a change-over switch (27) which is actuated in particular in the case of displacement or folding of the second part (5) of the housing with respect to the first part (3) of the housing and brings about a change-over between a touch screen input mode and an input means input mode as well as a change-over of display functions.

10. Portable telephone according to one of the preceding claims, **characterized by** a recess (11) for holding an input pin (13), in particular in a side face of the first or second part (3, 5) of the housing.

## Revendications

1. Téléphone portable, notamment, téléphone mobile (1) ou téléphone sans cordon, ayant un dispositif d'affichage et de saisie disposé sur une face supérieure d'une première partie (3) du coffret et conçu comme écran tactile (9) et ayant une deuxième partie (5) du boîtier comportant des moyens supplémentaires (23) de saisie, recouvrant, pour l'essentiel, l'écran tactile dans une première position d'exploitation du téléphone portable et le découvrant, pour l'essentiel, dans une deuxième position d'exploitation,
**caractérisé par le fait**
**que** la deuxième partie du boîtier supporte une capsule d'écouteur (21) de telle manière que celle-ci se trouve au-dessus de l'écran tactile (9) dans la première position d'exploitation.

2. Téléphone portable selon la revendication 1
**caractérisé par le fait**
**que** l'écran tactile (9) occupe, pour l'essentiel, la totalité de la face supérieure de la première partie (3) du boîtier.

3. Téléphone portable selon la revendication 1 ou 2
**caractérisé par le fait**
**que** les moyens supplémentaires (23) de saisie sont conçus comme clavier mécanique, une broche de pression (23.1) étant affectée à chacune des touches sur la face arrière tournée vers l'écran tactile, par l'intermédiaire de laquelle une pression ponctuelle est exercée sur une zone prédéfinie de l'écran tactile.

4. Téléphone portable selon la revendication 1 ou 2
**caractérisé par le fait**
**que** les moyens de saisie sont constitués par des évidements dans la deuxième partie (5) du boîtier en liaison avec des champs de saisie représentés sur l'écran tactile (9) et qui, dans un mode de saisie donné du téléphone, forment ensemble un masque de saisie pour l'écran tactile.

5. Téléphone portable selon la revendication 1 ou 2
**caractérisé par le fait**
**que** les moyens supplémentaires sont conçus comme clavier de saisie indépendant de l'écran tactile (9).

6. Téléphone portable selon l'une des revendications précédentes
**caractérisé par le fait**
**que** la deuxième partie du boîtier portant les moyens supplémentaires de saisie est coulissante par rapport à la première partie du boîtier portant l'écran tactile de telle sorte qu'elle libère complètement, pour l'essentiel, l'écran tactile, dans une première position, et le recouvre complètement, pour l'essentiel, dans une deuxième position.

7. Téléphone portable selon l'une des revendications 1 à 5
**caractérisé par le fait**
**que** la deuxième partie (5) du boîtier portant les moyens supplémentaires de saisie (23) est pivotante par rapport à la première partie (3) du boîtier de telle manière qu'elle libère complètement, pour l'essentiel, l'écran tactile (9), dans une première position (figure 2), et le recouvre complètement, pour l'essentiel, dans une deuxième position (figure 1).

8. Téléphone portable selon l'une des revendications précédentes
**caractérisé par le fait**
**que** la deuxième partie (5) du boîtier a une fenêtre (25) qui recouvre, dans une première position d'exploitation, d'une façon transparente, une partie (9a) de l'écran tactile (9).

9. Téléphone portable selon l'une des revendications précédentes
**caractérisé par**
un commutateur (27) qui est actionné, notamment, lors du glissement ou du basculement de la deuxième partie (5) du boîtier par rapport à la première partie (3) du boîtier et qui provoque une commutation entre un mode de saisie par l'écran tactile et un mode de saisie par des moyens de saisie, ainsi qu'une commutation de fonctions d'affichage.

10. Téléphone portable selon l'une des revendications précédentes
**caractérisé par**
un évidement (11) destiné à recevoir un stylet de saisie (13), notamment, sur une surface latérale de la première ou de la deuxième partie (3, 5) du boîtier.
